# FASCICULE DE BREVET EUROPEEN

(11) **EP 4 087 185 B1**
(45) Date de publication et mention de la délivrance du brevet: **21.10.2026**
(21) Numéro de dépôt: 22182299.2
(22) Date de dépôt: 04.05.2018
(51) Int. Cl.: H04L 9/40, G06F 21/55, H04L 67/12, G06F 11/30, G06F 11/34, B64D 45/00, G08G 5/21

(54) **PROCÉDÉ ET DISPOSITIF ÉLECTRONIQUE DE SURVEILLANCE D'UNE APPLICATION LOGICIELLE AVIONIQUE, PROGRAMME D'ORDINATEUR ET SYSTÈME AVIONIQUE ASSOCIÉS**
VERFAHREN UND ELEKTRONISCHE VORRICHTUNG ZUR ÜBERWACHUNG EINER SOFTWAREANWENDUNG FÜR LUFTFAHRZEUGE, ENTSPRECHENDES COMPUTERPROGRAMM UND ENTSPRECHENDES FLUGZEUGSYSTEM
METHOD AND ELECTRONIC DEVICE FOR MONITORING AN AVIONICS SOFTWARE APPLICATION, ASSOCIATED COMPUTER PROGRAM AND AVIONICS SYSTEM

(30) Priorité: 04.05.2017 FR 1700479
(43) Date de publication de la demande: 09.11.2022
(62) Numéro(s) de document de la (des) demande(s) initiale(s) en application de l'article 76 CBE: 18170905.6 / 3 399 720
(73) Titulaire: THALES, 92400 Courbevoie (FR)
(72) Inventeur: MARCOURT, Michael, 26027 VALENCE (FR); MONNIER, Stéphane, Jean-Mary, 33700 MERIGNAC (FR); FUMEY, Marc, Etienne, 31036 TOULOUSE CEDEX 1 (FR)
(74) Mandataire: Lavoix

(56) Documents cités:
- EP-A1- 1 296 252
- US-A1- 2002 120 662
- US-B1- 6 275 767
- US-B1- 6 735 703

## Description

La présente invention concerne un procédé de surveillance d'une application logicielle avionique apte à être exécutée sur une plateforme comportant des ressources et hébergeant un système d'exploitation, la plateforme étant destinée à être embarquée à bord d'un aéronef, le procédé étant mis en œuvre par un dispositif électronique de surveillance.

L'invention concerne également un programme d'ordinateur comportant des instructions logicielles qui, lorsqu'elles sont exécutées par un ordinateur, mettent en œuvre un tel procédé.

L'invention concerne également un dispositif électronique de surveillance d'une application logicielle avionique apte à être exécutée sur une plateforme comportant des ressources et hébergeant un système d'exploitation, la plateforme étant destinée à être embarquée à bord d'un aéronef.

L'invention concerne également un système électronique avionique comprenant une mémoire apte à stocker au moins une application logicielle avionique ; une plateforme apte à exécuter chaque application logicielle avionique, la plateforme comportant des ressources et hébergeant un système d'exploitation ; et un tel dispositif électronique de surveillance de chaque application logicielle avionique.

L'invention concerne le domaine de la cyber-sécurité des plateformes avioniques embarquées, en particulier de la surveillance des applications logicielles exécutées sur de telles plateformes avioniques embarquées.

On connaît du document EP 2 987 729 A1 un procédé de détermination d'une intrusion dans un système ou composant avionique embarqué à bord d'un aéronef. L'aéronef comporte de nombreux systèmes et composants avioniques communiquant entre eux via un réseau avionique de communications, le réseau avionique étant surveillé par un système dédié.

Ce procédé de détermination comprend la surveillance, par ledit système dédié, de communications de données via ledit réseau avionique pour quelques systèmes ou composants avioniques. Le procédé comprend ensuite la comparaison, par ledit système dédié, des communications surveillées pour au moins un système ou composant avionique avec un profil opérationnel correspondant, et la détermination d'une intrusion pour ledit système ou composant avionique, lorsque la comparaison indique qu'un profil d'intrusion est satisfait. Le procédé comprend alors la génération d'une alerte associée à l'intrusion déterminée.

US 6,275,767 B1 et US 2002/0120662 A1 concernent chacun la surveillance d'une application logicielle avionique apte à être exécutée sur une plateforme comportant des ressources et hébergeant un système d'exploitation, la plateforme étant destinée à être embarquée à bord d'un aéronef. US 6,735,703 B1 concerne la surveillance d'une application logicielle apte à être exécutée sur une plateforme comportant des ressources et hébergeant un système d'exploitation. EP 1 296 252 A1 concerne le filtrage de données dans un réseau.

Toutefois, de tels procédé et système associé de détermination ne permettent pas de détecter certaines attaques ciblées.

Le but de l'invention est alors de proposer un procédé et un dispositif de surveillance d'une application logicielle avionique apte à être exécutée sur une plateforme avionique, qui permette de détecter plus efficacement une attaque visant l'application logicielle.

A cet effet, l'invention a pour objet un procédé de surveillance d'une application logicielle avionique, selon la revendication 1.

Avec le procédé de surveillance selon l'invention, la mise en œuvre d'au moins l'une, de préférence d'au moins deux, de préférence encore d'au moins trois, et de préférence encore de chacune, des surveillances parmi la surveillance syntaxique, la surveillance sémantique, la surveillance de la dynamique et la surveillance de l'utilisation permet de définir précisément, c'est-à-dire de caractériser un domaine d'usage de l'application, également appelé domaine d'usage cyber. Le procédé de surveillance est alors apte à générer un signal d'alerte en cas de détection d'un comportement anormal de l'application, c'est-à-dire dès qu'elle sort du domaine d'usage caractérisé.

La caractérisation du domaine d'usage est prédéfinie, et faite préalablement à la surveillance de l'application avionique, par exemple lors d'une phase de préparation de mission.

Le procédé de surveillance selon l'invention permet alors une protection en profondeur de l'application, par opposition à une protection périphérique, via la surveillance du réseau avionique, de l'état de la technique.

Suivant d'autres aspects avantageux de l'invention, le procédé de surveillance est selon l'une quelconques des revendications 2 à 6.

L'invention a également pour objet un programme d'ordinateur selon la revendication 7.

L'invention a également pour objet un dispositif électronique de surveillance d'une application logicielle avionique, selon la revendication 8.

L'invention a également pour objet un système électronique avionique selon la revendication 9.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

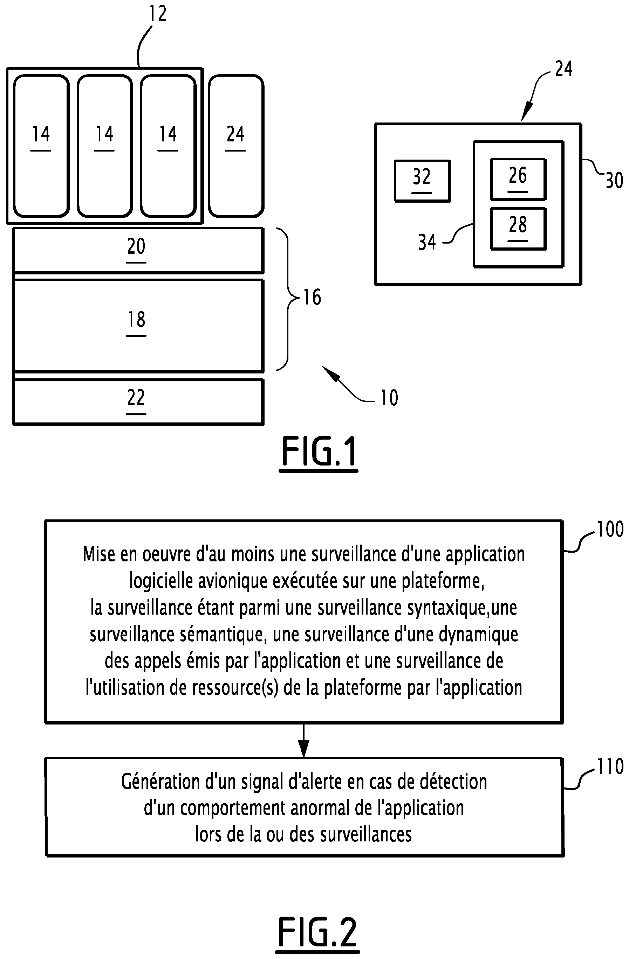

- la figure 1 est une représentation schématique d'un système électronique avionique selon l'invention, comprenant une mémoire apte à stocker au moins une application logicielle avionique ; une plateforme apte à exécuter chaque application logicielle avionique, la plateforme comportant des ressources et hébergeant un système d'exploitation ; et un dispositif électronique de surveillance de chaque application logicielle avionique ; et
- la figure 2 est un organigramme d'un procédé, selon l'invention, de surveillance d'une application logicielle avionique apte à être exécutée sur la plateforme, le procédé étant mis en œuvre par le dispositif de surveillance de la figure 1.

Sur la figure 1, un système électronique avionique 10, destiné à embarqué à bord d'un aéronef, comprend une mémoire 12 apte à stocker au moins une application logicielle avionique 14 ; une plateforme 16 apte à exécuter chaque application logicielle avionique 14, la plateforme 16 comportant des ressources 18 et hébergeant un système d'exploitation 20, la plateforme 16 étant reliée d'autres systèmes électroniques avioniques 22 de l'aéronef.

Le système électronique avionique 10 comprend en outre, selon l'invention, un dispositif électronique 24 de surveillance de chaque application logicielle avionique 14.

L'aéronef est de préférence un avion. En variante, l'aéronef est un hélicoptère, ou encore un drone piloté à distance par un pilote.

Dans l'exemple de la figure 1, la mémoire 12 est apte à stocker trois applications logicielles avioniques 14 distinctes, et le dispositif électronique de surveillance 24 est alors configuré pour surveiller chacune de ces applications logicielles avioniques 14.

Chaque application logicielle avionique 14 est destinée à être exécutée par la plateforme 16 et alors conçue pour émettre un ou plusieurs appels à destination du système d'exploitation 20 hébergé par la plateforme 16 et est également configurée pour utiliser des ressources 18 de la plateforme 16.

Chaque application logicielle avionique 14 est, par exemple, configurée pour réaliser deux types de traitements, à savoir des traitements périodiques et des traitements apériodiques.

Les traitements périodiques sont, par exemple, liés à l'acquisition et au(x) traitement(s) de données reçues, telles que des données issues de capteurs de l'aéronef, des données issues de traitement(s) d'autres applications, des données générées suite à une action d'un pilote de l'aéronef. Pour ne rater aucun évènement ces traitements doivent être effectués de manière périodique. Chaque traitement périodique doit alors être terminé avant le début de la prochaine période d'acquisition ou de traitement.

Les traitements apériodiques ne dépendent, comme leur nom l'indique, pas d'une période de traitement ou d'acquisition, et ne doivent alors pas être nécessairement terminés avant le début de la prochaine période d'acquisition ou de traitement.

Chaque application logicielle avionique 14 est également appelée fonction avionique. Les applications logicielles avioniques 14 remplissent différentes fonctions pour l'accomplissement d'un vol, et sont par exemple installées sur différentes plateformes 16 et utilisent les ressources 18 desdites plateformes 16.

De telles fonctions étant critiques, comme par exemple le système de freinage ou le système de gestion du vol, chaque application logicielle avionique 14 est de préférence surveillée régulièrement par le dispositif électronique de surveillance 24, pendant sensiblement toute la durée d'exécution de l'application logicielle avionique 14 par la plateforme 16.

La plateforme 16 est destinée à être embarquée à bord de l'aéronef. La plateforme 16 est, par exemple, une unité de traitement d'informations formée d'une ou plusieurs mémoires associées à un ou plusieurs processeurs.

Les ressources 18 de la plateforme 16 sont des éléments physiques ou logiques propres à être mis à disposition de la ou des applications logicielles avioniques 14.

Les ressources 18 sont, par exemple, réparties en les catégories suivantes :
- les ressources de type traitement de données (en anglais « *processing* »). De telles ressources sont, par exemple, la puissance de calcul d'un processeur ou la capacité de stockage d'une mémoire.
- les ressources de type entrées et sorties.
- les ressources spécifiques au réseau avionique. De telles ressources sont, par exemple, les routeurs de communication d'un réseau ARINC664.
- les ressources de type graphique, c'est-à-dire les ressources permettant un affichage. Un écran est un exemple de telles ressources.
- les ressources de type mémoire de masse (en anglais « *mass memory* »).

Pour les ressources 18, l'usage nominal est caractérisable avec des registres des composants matériels de comptabilisation des évènements, tels que nombre de trames Ethernets reçues, nombre de trames rejetées, et/ou avec des registres des composants matériels stockant le ou les derniers évènements, tels que l'adresse de retour d'exécution suite à une interruption.

Chaque ressource 18 présente une capacité. La capacité de chaque ressource 18 caractérise la taille de ladite ressource 18. Pour une ressource 18 de type entrée-sortie, la capacité de ladite ressource 18 est quantifiable par le nombre d'entrées et de sorties différentes de ladite ressource 18 (par exemple, le nombre d'entrées discrètes, analogiques, de bus ARINC 429, etc.). Pour une ressource 18 de type traitement de données, la capacité de ladite ressource 18 est quantifiable par la puissance de calcul du processeur de ladite ressource 18 et/ou le volume de stockage de la mémoire de ladite ressource 18.

Le système d'exploitation 20 est, par exemple, un système d'exploitation conforme à la norme ARINC 653, ou un système d'exploitation POSIX, ou encore un hyperviseur, ou encore un middleware.

L'homme du métier comprendra alors que le système d'exploitation 20 s'entend au sens large, et est, de manière plus générale, un ensemble d'au moins un logiciel de base, conçu pour offrir des services de différents types à chaque application 14.

Un service est donc une fonction du logiciel de base utilisable par la ou les applications 14 et atteignable par un appel, également appelé appel à un service (de l'OS) ou encore appel système. Un exemple de logiciel de base est un OS ARINC 653 ou POSIX qui fournit de tels services. Dans le contexte de l'invention, l'homme du métier comprendra que c'est la notion d'appel à un service qui importe, et non pas le service en tant que tel, offert par le logiciel de base.

Les services offerts par le système d'exploitation 20 sont connus en soi, et sont par exemple des services d'acquisition d'entrée(s)/sortie(s), de gestion de processus, de gestion de protocole(s) de communication, etc. Les types de service sont alors l'acquisition d'entrée(s)/sortie(s), la gestion de processus, la gestion de protocole(s) de communication, etc. L'homme du métier notera que les normes ARINC 653 et POSIX comportent, par exemple, chacune une liste des services généralement employés dans le domaine aéronautique. L'homme du métier observera toutefois que l'invention concerne plus généralement tout logiciel de base adapté à une application logicielle avionique 14, dans la mesure où le ou les services offerts par ce logiciel de base, ainsi que le ou les appels au(x) service(s) émis par chaque application logicielle avionique 14, sont identifiables.

Le dispositif électronique de surveillance 24 est configuré pour surveiller chaque application logicielle avionique 14 apte à être exécutée sur la plateforme 16, et comprend un module de surveillance 26 configuré pour mettre en œuvre au moins une surveillance de l'application parmi les quatre surveillances suivantes : une surveillance syntaxique de chaque appel émis par l'application 14 à destination du système d'exploitation 20, une surveillance sémantique de chaque appel émis par l'application 14 à destination du système d'exploitation 20, une surveillance d'une dynamique des appels émis par l'application 14 à destination du système d'exploitation 20 et une surveillance de l'utilisation par l'application 14 des ressources 18 de la plateforme 16.

Le dispositif électronique de surveillance 24 comprend également un module de génération 28 configuré pour générer un signal d'alerte en cas de détection d'un comportement anormal de l'application 14 lors de la mise en œuvre d'au moins l'une desdites surveillances par le module de surveillance 26.

Dans l'exemple de la figure 1, le dispositif de surveillance 24 est, par exemple distinct de la plateforme 16, et comprend une unité de traitement d'informations 30 formée par exemple d'un processeur 32 associé à une mémoire 34.

En variante, pour laquelle le dispositif de surveillance 24 est représenté en grisé sur la figure 1, le dispositif de surveillance 24 est apte à être exécuté directement par la plateforme 16 et à utiliser alors ses ressources 18. Cette variante est un mode de réalisation préférentiel, et le dispositif de surveillance 24 est alors de préférence hébergé en outre au sein d'une partition mémoire spécifique de la plateforme 16, cette partition spécifique étant elle-même protégée contre des cyber-attaques, via par exemple un ou plusieurs contrôles d'accès et/ou une protection en intégrité.

Dans l'exemple de la figure 1, que le dispositif de surveillance 24 soit distinct de la plateforme 16, ou bien hébergé et exécuté par la plateforme 16, le module de surveillance 26 et le module de génération 28 sont réalisés chacun sous forme d'un logiciel, ou d'une brique logicielle, exécutable par un processeur, tel que le processeur 32 lorsque le dispositif de surveillance 24 est distinct de la plateforme 16. La mémoire 34 du dispositif de surveillance 24 est alors apte à stocker un logiciel de surveillance pour la mise en œuvre d'au moins une surveillance de l'application parmi les quatre surveillances suivantes : une surveillance syntaxique de chaque appel émis par l'application 14 à destination du système d'exploitation 20, une surveillance sémantique de chaque appel émis par l'application 14 à destination du système d'exploitation 20, une surveillance d'une dynamique des appels émis par l'application 14 à destination du système d'exploitation 20, et une surveillance de l'utilisation par l'application 14 des ressources 18 de la plateforme 16. La mémoire 34 du dispositif de surveillance 24 est également apte à stocker un logiciel de génération d'un signal d'alerte en cas de détection d'un comportement anormal de l'application 14 lors de la mise en œuvre d'au moins l'une desdites surveillances par le logiciel de surveillance. Le processeur est alors apte à exécuter le logiciel de surveillance et le logiciel de génération.

En variante non représentée, le module de surveillance 26 et le module de génération 28 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

Lorsque le dispositif de surveillance 24 est réalisé sous forme d'un ou plusieurs logiciels, c'est-à-dire en forme d'un programme d'ordinateur, il est en outre apte à être enregistré sur un support, non représenté, lisible par ordinateur. Le support lisible par ordinateur est, par exemple, un médium adapté à mémoriser des instructions électroniques et capable d'être couplé à un bus d'un système informatique. A titre d'exemple, le support lisible est une disquette ou disque souple, (de la dénomination anglaise *Floppy disk*), un disque optique, un CD-ROM, un disque magnéto-optique, une mémoire ROM, une mémoire RAM, tout type de mémoire non volatile (par exemple, EPROM, EEPROM, FLASH, NVRAM) une carte magnétique ou une carte optique. Sur le support lisible est alors mémorisé un programme d'ordinateur comprenant des instructions logicielles.

Le module de surveillance 26 est configuré pour mettre œuvre de préférence la surveillance sémantique de chaque appel émis par l'application 14 à destination du système d'exploitation 20.

En complément facultatif, le module de surveillance 26 est configuré pour mettre œuvre au moins deux, de préférence au moins trois, de préférence encore chacune, des surveillances parmi la surveillance syntaxique de chaque appel émis par l'application 14 à destination du système d'exploitation 20, la surveillance sémantique de chaque appel émis par l'application 14 à destination du système d'exploitation 20, la surveillance d'une dynamique des appels émis par l'application 14 à destination du système d'exploitation 20 et la surveillance de l'utilisation par l'application 14 des ressources 18 de la plateforme 16.

En cas d'au moins deux surveillances distinctes, le module de surveillance 26 est configuré pour mettre œuvre de préférence la surveillance sémantique de chaque appel émis et la surveillance d'une dynamique des appels émis par l'application 14 à destination du système d'exploitation 20.

En cas d'au moins trois surveillances distinctes, le module de surveillance 26 est configuré pour mettre œuvre de préférence la surveillance sémantique de chaque appel émis, la surveillance de la dynamique des appels émis et la surveillance de l'utilisation par l'application 14 des ressources 18 de la plateforme 16.

Le module de surveillance 26 est de préférence configuré pour mettre en œuvre régulièrement, pendant sensiblement toute la durée d'exécution de l'application logicielle avionique par la plateforme, la ou les surveillances précitées.

Pour la surveillance syntaxique, le module de surveillance 26 est configuré pour vérifier au moins l'un de premier, deuxième et troisième critères syntaxiques. Le module de surveillance 26 est configuré pour vérifier de préférence au moins deux, de préférence encore au moins trois, et de préférence encore chacun, parmi les premier, deuxième et troisième critères syntaxiques.

Pour la surveillance sémantique, le module de surveillance 26 est configuré pour vérifier qu'au moins l'un de premier, deuxième et troisième critères sémantiques est rempli par une ou plusieurs données contenues dans chaque appel de l'application 14 au système d'exploitation 20, dit également appel système. Le module de surveillance 26 est configuré pour vérifier de préférence au moins deux, de préférence encore chacun, parmi les premier, deuxième et troisième critères sémantiques.

Pour la surveillance de la dynamique, le module de surveillance 26 est configuré pour vérifier qu'au moins l'un de premier, deuxième, troisième, quatrième et cinquième critères de dynamique est rempli par l'application 14. Le module de surveillance 26 est configuré pour vérifier de préférence au moins deux, de préférence encore au moins trois, de préférence encore au moins quatre, et de préférence encore chacun, parmi les premier, deuxième, troisième, quatrième et cinquième critères de dynamique.

Ces critères syntaxiques, respectivement sémantiques, et respectivement de dynamique, seront décrits plus en détail par la suite, dans la partie relative à la description du fonctionnement du dispositif de surveillance 24 selon l'invention.

Pour la surveillance de l'utilisation, le module de surveillance 26 est configuré pour vérifier qu'au moins un paramètre de ressource appartient à un intervalle prédéfini de valeurs respectif, chaque paramètre étant choisi parmi le groupe consistant en : un nombre d'accès mémoire, une quantité de mémoire utilisée, une dispersion des accès mémoire, un temps d'exécution CPU, un temps d'exécution GPU, un nombre d'entrées utilisées de la plateforme et un nombre de sorties utilisées de la plateforme.

Le module de génération 28 est configuré pour générer le signal d'alerte en cas de détection, lors de la mise en œuvre d'au moins l'une desdites surveillances précitées, d'un comportement anormal de l'application 14 surveillée.

Par comportement anormal, on entend qu'au moins l'un des critères surveillés, c'est-à-dire pris en compte, parmi les critères définis ci-dessus et pour la ou les surveillances mises en œuvre par le module de surveillance 26, n'est pas rempli, c'est-à-dire n'est pas vérifié.

L'homme du métier notera alors que l'identification d'un comportement anormal d'une application 14 surveillée est réalisée par comparaison avec le domaine prédéfini d'usage de l'application, également appelé domaine prédéfini d'usage cyber, ce domaine correspondant aux limites des différents critères syntaxiques, sémantiques et de dynamique, tels que définis ci-dessus, ainsi que le cas échéant à la vérification du ou des paramètres de ressource pour la surveillance de l'utilisation.

Cette comparaison est généralement une comparaison avec des seuils prédéfinis, et l'homme du métier observera toutefois qu'en variante d'autres méthodes sont employées selon la ou les surveillances effectuées, avec par exemple des vérifications d'équations arithmétiques ou logiques à partir de données mesurées et/ou prédéterminées.

Le fonctionnement du dispositif de surveillance 24 selon l'invention va désormais être expliqué à l'aide de la figure 2 représentant un organigramme du procédé, selon l'invention, de surveillance d'une application logicielle avionique 14 apte à être exécutée sur la plateforme 16, le procédé étant mis en œuvre par le dispositif électronique de surveillance 24.

L'homme du métier observera tout d'abord que les différentes surveillances et critères associés, tels que définis ci-dessus, sont définis lors d'une phase de conception préliminaire ou lors d'une phase de préparation de mission, préalablement à la mise en œuvre du procédé de surveillance selon l'invention. Cette définition des surveillances et critères associés est en outre de préférence faite préalablement au vol de l'aéronef, le procédé de surveillance selon l'invention étant de préférence mis en œuvre lors du vol de l'aéronef.

Lors d'une étape 100, le dispositif de surveillance 24 met en œuvre, via son module de surveillance 26, au moins une surveillance de l'application 14 parmi les quatre surveillances suivantes :
- une surveillance syntaxique de chaque appel émis par l'application à destination du système d'exploitation,
- une surveillance sémantique de chaque appel émis par l'application à destination du système d'exploitation,
- une surveillance d'une dynamique des appels émis par l'application à destination du système d'exploitation, et
- une surveillance de l'utilisation par l'application des ressources de la plateforme.

Lors de cette étape de surveillance 100, le module de surveillance 26 met de préférence en œuvre au moins deux, de préférence au moins trois, de préférence encore chacune, des surveillances parmi la surveillance syntaxique, la surveillance sémantique, la surveillance de la dynamique et la surveillance de l'utilisation.

Cette étape 100 de mise en œuvre de la ou des surveillances est de préférence effectuée régulièrement, pendant sensiblement toute la durée d'exécution de l'application logicielle avionique 14 par la plateforme 16.

La surveillance syntaxique comporte la vérification d'au moins l'un des premier, deuxième et troisième critères syntaxiques.

La surveillance syntaxique comporte la vérification de préférence d'au moins deux, de préférence encore d'au moins trois, et de préférence encore de chacun, parmi les premier, deuxième et troisième critères syntaxiques.

Le premier critère syntaxique est l'appartenance de chaque appel, émis par l'application 14 considérée au système d'exploitation 20, à une liste d'appels autorisés au système d'exploitation 20.

Le deuxième critère syntaxique est la conformité de la succession des appels, émis par l'application 14 considérée au système d'exploitation 20, à des séquences d'appels autorisées.

Le troisième critère syntaxique est la conformité de chaque donnée par rapport à un format correspondant prédéfini. Pour le troisième critère syntaxique, le module de surveillance 26 vérifie par exemple le respect d'une grammaire prédéfinie ou encore l'appartenance d'un champ à une liste prédéfinie de champs. La grammaire s'entend en langage informatique comme un ensemble de règles prédéfinies devant être respectées entre des champs, et les champs sont par exemple des champs d'un message, des champs d'une base de données.

La surveillance sémantique comporte la vérification qu'au moins l'un des premier, deuxième et troisième critères sémantiques est rempli par une ou plusieurs données contenues dans chaque appel de l'application 14 au système d'exploitation 20.

La surveillance sémantique comporte la vérification de préférence d'au moins deux, et de préférence encore de chacun, parmi les premier, deuxième et troisième critères sémantiques.

Le premier critère sémantique est l'appartenance à un intervalle prédéfini de valeurs du délai de mise à jour de chaque donnée. L'intervalle prédéfini de valeurs pour le premier critère sémantique est par exemple lié à chaque période du ou des traitements périodiques effectués par l'application 14. Les principaux intervalles sont obtenus par une mesure préalable de la périodicité du ou des traitements. L'intervalle prédéfini de valeurs pour le premier critère sémantique est par exemple l'intervalle de valeurs égales à plus ou moins 10% près à la période mesurée préalablement. A titre d'exemple, pour la surveillance d'une application donnée exploitant 3 premières données rafraichies toutes les 50ms et 2 deuxièmes données rafraichies toutes les 100ms, l'intervalle prédéfini de valeurs associé au traitement des premières valeurs sera compris entre 45 ms et 55 ms, et celui associé au traitement des deuxièmes valeurs sera compris entre 90 ms et 110 ms.

Le deuxième critère sémantique est un critère de cohérence pour au moins une donnée prédéfinie, telle qu'une position ou une vitesse de l'aéronef.

Le troisième critère sémantique est un critère de cohérence entre au moins deux données prédéfinies, telles que la position et la vitesse de l'aéronef.

Lorsqu'une donnée est régie par une loi physique ou lorsque des données sont liées entre elles par une loi physique, alors le critère de cohérence associé à ces deuxième et troisième critères sémantiques est le respect de ladite loi physique. A titre d'exemple, la vitesse et la position ces deuxième et troisième critères sémantiques d'un objet, tel que l'aéronef, sont liées par une loi physique bien connue, et l'écart entre deux positions successives, rapporté au temps, doit alors être cohérent avec la vitesse.

Lorsque des données sont liées entre elles par leur format, leur type ou encore leur structure, alors le critère de cohérence associé à ces deuxième et troisième critères sémantiques vise à vérifier cette cohérence de format, de type ou de structure. A titre d'exemple, la somme des longueurs des données d'un message ne peut pas dépasser la longueur du message qui les contient.

En variante ou en complément, les deuxième et troisième critères sémantiques sont basés sur un algorithme de vérification d'un ensemble de données nouvelles par rapport à un ensemble de données précédentes, suivant une loi prédéfinie.

La surveillance de la dynamique comporte la vérification qu'au moins l'un des premier, deuxième, troisième, quatrième et cinquième critères de dynamique est rempli par l'application.

La surveillance de la dynamique comporte la vérification de préférence d'au moins deux, de préférence encore d'au moins trois, de préférence encore d'au moins quatre, et de préférence encore de chacun, parmi les premier, deuxième, troisième, quatrième et cinquième critères de dynamique.

Le premier critère de dynamique est que le nombre de services du système d'exploitation 20 requis par l'application 14 sous surveillance est, au cours d'une période temporelle de durée prédéfinie, inférieur à un nombre maximal prédéfini de services par unité de temps. Dans les exemples suivants, dans un contexte ARINC 653, une application 14 utilise de nombreux services, dont une partie est surveillée. Ci-après des exemples :
- Exemple 1 - Un seul service surveillé : le seuil prédéfini est de 10 appels au cours d'une période temporelle de 50 ms, pour les appels au service READ_SAMPLING_MESSAGE.
- Exemple 2 - Plusieurs services surveillés : le nombre maximal prédéfini de services par unité de temps est de 20 services toutes les 200 ms requis parmi une liste de 5 services, tels que READ SAMPLING MESSAGE, WRITE SAMPLING MESSAGE, SET EVENT, WAIT EVENT, SUSPEND.

Le deuxième critère de dynamique est qu'un nombre d'erreurs sur les services est, au cours d'une période temporelle de durée prédéfinie, inférieur à un nombre maximal prédéfini d'erreurs. A titre d'exemple, le nombre maximal prédéfini d'erreurs est égal à 0 lorsque la plateforme 16 est une plateforme ayant un niveau de sécurité critique, c'est-à-dire le niveau de sécurité maximal. Pour une plateforme 16 ayant un niveau de sécurité inférieur, le nombre maximal prédéfini d'erreurs est par exemple égal à 2 erreurs toutes les 500 ms.

Le troisième critère de dynamique est que le nombre de types distincts de services requis par l'application est, au cours d'une période temporelle de durée prédéfinie, inférieur à un nombre maximal prédéfini de types. Le nombre maximal prédéfini de types pour le troisième critère de dynamique dépend par exemple du type des traitements demandés par l'application avionique 14 considérée, à savoir périodiques et apériodiques. Pour un traitement périodique, les actions possibles issues d'une modification d'une entrée sont limitées et connues. Pour les traitements apériodiques, les traitements sont par exemple regroupés : durant une demande de téléchargement, le nombre de demandes d'enregistrement dans un secteur flash et de calculs de CRC sur ce secteur est connu et borné. En outre, une demande faite de manière isolée par rapport auxdits traitements est de préférence interdite, à l'exception bien entendu de la première demande d'un groupe de demandes qui est par définition isolée, s'agissant de la première demande du groupe.

Le quatrième critère de dynamique est qu'une variation du nombre d'appels de services par types et au cours des différentes périodes temporelles prédéfinies est inférieure à un seuil. A titre d'exemple, pour un traitement périodique (qui est par nature peu variable), le seuil est égal à 5 types de services (types d'appels différents) toutes les 50ms. L'application 14 a de préférence également le droit de changer un type de services entre 2 périodes successives. A chaque échantillon émis, l'échantillon émis est alors de préférence comparé aux précédents échantillons émis au regard d'une règle métier de vérification de la donnée par rapport aux échantillons précédents. Par exemple, l'écart est supérieur à une valeur minimale et/ou inférieur à une valeur maximale, et/ou la valeur nouvelle est au plus à un écart-type de la valeur précédente.

Le cinquième critère de dynamique est qu'un nombre de séquences d'appels aux services est, au cours d'une période temporelle de durée prédéfinie, inférieur à un nombre maximal prédéfini de séquences. Une valeur du nombre maximal prédéfini de séquences pour le cinquième critère de dynamique est, par exemple, définie à partir d'une analyse des traitements périodique et apériodique demandés et/ou d'un apprentissage. Une séquence d'appels est une succession d'appels susceptibles d'être répétés plusieurs fois dans le temps, et définit alors un motif (de l'anglais *pattern*). Le nombre maximal prédéfini de séquences est par exemple égal à 10.

En variante ou en complément, la surveillance de la dynamique est mise en œuvre en codant, par un identifiant unique, chaque appel de l'application logicielle avionique 14 au système d'exploitation 20, et en utilisant l'algorithme de Lempel-Ziv-Welch pour compresser tous les appels au système d'exploitation 20 effectués par ladite application 14. Plus le dictionnaire de données construit par l'algorithme est profond, plus il y a une richesse dans la diversité des séquences d'appels effectués. Le couplet nombre d'appels et profondeur du dictionnaire devient alors un paramètre du « domaine d'usage », permettant de surveiller l'évolution de l'application logicielle avionique 14 dans le temps.

La surveillance de l'utilisation comporte la vérification qu'au moins un paramètre de ressource appartient à un intervalle prédéfini de valeurs respectif, chaque paramètre étant choisi parmi le groupe consistant en : un nombre d'accès mémoire, une quantité de mémoire utilisée, une dispersion des accès mémoire, un temps d'exécution CPU, un temps d'exécution GPU, un nombre d'entrées utilisées de la plateforme et un nombre de sorties utilisées de la plateforme.

Pour la surveillance de l'utilisation, l'intervalle de valeurs prédéfini associé à la quantité de mémoire utilisée est par exemple compris entre 1Mo et 3 Mo, de préférence avec une valeur maximale sensiblement égale à 2,5 Mo. L'intervalle de valeurs prédéfini associé à la dispersion des accès mémoire est par exemple compris entre 3Mo et 5 Mo, de préférence avec une valeur maximale sensiblement égale à 4 Mo. L'intervalle de valeurs prédéfini associé au temps d'exécution CPU est par exemple compris entre 4 et 6ms.

Lors d'une étape suivante 110, le dispositif de surveillance 24 génère, via son module de génération 28, un signal d'alerte en cas de détection d'un comportement anormal de l'application 14 au cours de l'une desdites surveillances lors de l'étape 100 précédente.

L'homme du métier notera que, dans tout ce qui précède, l'adjectif « prédéfini » ne doit pas être interprété de manière restrictive comme signifiant « fixé » ou « invariable ». Par « prédéfini », on entend alors défini avant une étape considérée, l'étape considérée étant ici l'étape 100 de surveillance de la ou des applications logicielles avioniques 14. Autrement dit, lorsque l'adjectif « prédéfini » est associé à un objet donné, tel qu'un seuil, une durée, un intervalle de valeurs, un nombre maximal, cela signifie que cet objet est défini, i.e. déterminé, initialement ou encore par exemple déterminé par apprentissage préalablement à la surveillance effective de l'application considérée, c'est-à-dire préalablement à l'étape 110.

Ainsi, le procédé de surveillance selon l'invention permet de mettre en œuvre au moins l'une, de préférence au moins deux, de préférence encore au moins trois, et de préférence encore chacune, des surveillances parmi la surveillance syntaxique, la surveillance sémantique, la surveillance de la dynamique et la surveillance de l'utilisation permet de définir précisément, c'est-à-dire de caractériser le domaine d'usage de l'application, aussi appelé domaine d'usage cyber ; puis de générer une alerte dès qu'un comportement anormal de la ou des applications logicielles 14 sous surveillance est détecté, c'est-à-dire dès qu'au moins une des applications logicielles 14 sous surveillance sort de son domaine d'usage caractérisé.

Le procédé de surveillance selon l'invention permet alors une protection en profondeur de l'application, par opposition à une protection périphérique, via la surveillance du réseau avionique, de l'état de la technique. Autrement dit, le procédé de surveillance selon l'invention ne contribue pas à la capacité de bloquer l'intrusion, mais augmente de manière importante la capacité à l'empêcher ensuite de nuire.

En outre, le procédé de surveillance selon l'invention, ayant connaissance du fonctionnement 'normal' de la ou des applications logicielles 14 suivies, permet de détecter une attaque cyber bien plus tôt que ne le ferait un procédé de l'état de la technique.

La surveillance mise en œuvre préférentiellement par le module de surveillance 26 est la surveillance sémantique de chaque appel émis par l'application 14 à destination du système d'exploitation 20, et elle permet notamment de détecter un code, ou fonction logicielle, malveillant essayant de modifier l'intégrité de données internes à l'application logicielle avionique 14.

La surveillance mise ensuite préférentiellement en œuvre par le module de surveillance 26 est la surveillance d'une dynamique des appels émis par l'application 14 à destination du système d'exploitation 20, et elle permet notamment de détecter un déni de service d'au moins une partie de l'application logicielle avionique 14.

La surveillance mise ensuite préférentiellement en œuvre par le module de surveillance 26 est la surveillance de l'utilisation par l'application 14 des ressources 18 de la plateforme 16, et elle permet notamment de détecter un code, ou fonction logicielle, malveillant exploitant de manière détournée des ressources matérielles de la plateforme 16.

Enfin, la surveillance syntaxique de chaque appel émis par l'application 14 à destination du système d'exploitation 20 permet notamment de détecter un code, ou fonction logicielle, malveillant inséré dans l'application logicielle avionique 14 et exécutant des appels non prévus au système d'exploitation 20.

Le module de surveillance 26 est de préférence configuré pour mettre en œuvre régulièrement, pendant sensiblement toute la durée d'exécution de l'application logicielle avionique par la plateforme, la ou les surveillances précitées.

On conçoit ainsi que le procédé et le dispositif de surveillance 24 selon l'invention permettent de détecter plus efficacement une attaque visant la ou les applications logicielles 14 sous surveillance.

## Revendications

1. Procédé de surveillance d'une application logicielle avionique (14) apte à être exécutée sur une plateforme (16) comportant des ressources (18) et hébergeant un système d'exploitation (20), la plateforme (16) étant destinée à être embarquée à bord d'un aéronef, le procédé étant mis en œuvre par un dispositif électronique de surveillance (24) et comprenant les étapes consistant à :
- la mise en œuvre (100) d'au moins une surveillance de l'application (14) parmi les quatre surveillances suivantes :
+ une surveillance syntaxique de chaque appel émis par l'application (14) à destination du système d'exploitation (20),
+ une surveillance sémantique de chaque appel émis par l'application (14) à destination du système d'exploitation (20),
+ une surveillance d'une dynamique des appels émis par l'application (14) à destination du système d'exploitation (20), et
+ une surveillance de l'utilisation par l'application (14) des ressources (18) de la plateforme (16) ;
ladite étape de mise en œuvre comportant la mise en œuvre de la surveillance sémantique de chaque appel émis par l'application (14) à destination du système d'exploitation (20) ;
la surveillance sémantique comportant la vérification qu'au moins l'un de premier, deuxième et troisième critères sémantiques est rempli par une ou plusieurs données contenues dans chaque appel de l'application (14) au système d'exploitation (20), la ou les données contenues dans chaque appel de l'application (14) étant choisies parmi le groupe consistant en : des données issues de capteurs de l'aéronef, des données issues de traitement(s) d'autres applications, des données générées suite à une action d'un pilote de l'aéronef,
le premier critère sémantique étant l'appartenance à un intervalle prédéfini de valeurs du délai de mise à jour de chaque donnée,
le deuxième critère sémantique étant un critère de cohérence pour au moins une donnée prédéfinie, et
le troisième critère sémantique étant un critère de cohérence entre au moins deux données prédéfinies,
- la génération (110) d'un signal d'alerte en cas de détection d'un comportement anormal de l'application (14) lors de la mise en œuvre (100) d'au moins l'une desdites surveillances.

2. Procédé selon la revendication 1, dans lequel l'étape de mise en oeuvre comporte la mise en oeuvre d'au moins deux, de préférence d'au moins trois, de préférence encore de chacune, des surveillances parmi la surveillance syntaxique, la surveillance sémantique, la surveillance de la dynamique et la surveillance de l'utilisation.

3. Procédé selon l'une quelconque des revendications précédentes, dans lequel la surveillance syntaxique comporte la vérification d'au moins l'un de premier, deuxième et troisième critères syntaxiques,
le premier critère syntaxique étant l'appartenance de chaque appel émis à une liste d'appels autorisés au système d'exploitation (20),
le deuxième critère syntaxique étant la conformité de la succession des appels à des séquences d'appels autorisées,
le troisième critère syntaxique étant la conformité de chaque donnée par rapport à un format correspondant prédéfini.

4. Procédé selon l'une quelconque des revendications précédentes, dans lequel le système d'exploitation (20) est apte à offrir plusieurs services, de différents types, à l'application (14), et
dans lequel la surveillance de la dynamique comporte la vérification qu'au moins l'un de premier, deuxième, troisième, quatrième et cinquième critères de dynamique est rempli par l'application (14),
le premier critère de dynamique étant que le nombre de services requis par l'application (14) est, au cours d'une période temporelle de durée prédéfinie, inférieur à un nombre maximal prédéfini de services par unité de temps,
le deuxième critère de dynamique étant qu'un nombre d'erreurs sur les services est, au cours d'une période temporelle de durée prédéfinie, inférieur à un nombre maximal prédéfini d'erreurs,
le troisième critère de dynamique étant que le nombre de types distincts de services requis par l'application (14) est, au cours d'une période temporelle de durée prédéfinie, inférieur à un nombre maximal prédéfini de types,
le quatrième critère de dynamique étant qu'une variation du nombre d'appels de services par types et au cours des différentes périodes temporelles prédéfinies est inférieure à un seuil, et
le cinquième critère de dynamique étant qu'un nombre de séquences d'appels aux services est, au cours d'une période temporelle de durée prédéfinie, inférieur à un nombre maximal prédéfini de séquences.

5. Procédé selon l'une quelconque des revendications précédentes, dans lequel la surveillance de l'utilisation comporte la vérification qu'au moins un paramètre de ressource appartient à un intervalle prédéfini de valeurs respectif, chaque paramètre étant choisi parmi le groupe consistant en : un nombre d'accès mémoire, une quantité de mémoire utilisée, une dispersion des accès mémoire, un temps d'exécution CPU, un temps d'exécution GPU, un nombre d'entrées utilisées de la plateforme (16) et un nombre de sorties utilisées de la plateforme (16).

6. Procédé selon l'une quelconque des revendications précédentes, dans lequel l'étape de mise en oeuvre est effectuée régulièrement, pendant sensiblement toute la durée d'exécution de l'application logicielle avionique (14) par la plateforme (16).

7. Programme d'ordinateur comportant des instructions logicielles qui, lorsqu'elles sont exécutées par un ordinateur, mettent en oeuvre un procédé selon l'une quelconque des revendications précédentes.

8. Dispositif électronique (24) de surveillance d'une application logicielle avionique (14) apte à être exécutée sur une plateforme (16) comportant des ressources (18) et hébergeant un système d'exploitation (20), la plateforme (16) étant destinée à être embarquée à bord d'un aéronef,
le dispositif électronique de surveillance (24) comprenant :
- un module de surveillance (26) configuré pour mettre en oeuvre au moins une surveillance de l'application (14) parmi les quatre surveillances suivantes :
+ une surveillance syntaxique de chaque appel émis par l'application (14) à destination du système d'exploitation (20),
+ une surveillance sémantique de chaque appel émis par l'application (14) à destination du système d'exploitation (20),
+ une surveillance d'une dynamique des appels émis par l'application (14) à destination du système d'exploitation (20), et
+ une surveillance de l'utilisation par l'application (14) des ressources (18) de la plateforme (16) ;
ledit module de surveillance (26) étant configuré pour mettre en oeuvre la surveillance sémantique de chaque appel émis par l'application (14) à destination du système d'exploitation (20) ;
la surveillance sémantique comportant la vérification qu'au moins l'un de premier, deuxième et troisième critères sémantiques est rempli par une ou plusieurs données contenues dans chaque appel de l'application (14) au système d'exploitation (20), la ou les données contenues dans chaque appel de l'application (14) étant choisies parmi le groupe consistant en : des données issues de capteurs de l'aéronef, des données issues de traitement(s) d'autres applications, des données générées suite à une action d'un pilote de l'aéronef,
le premier critère sémantique étant l'appartenance à un intervalle prédéfini de valeurs du délai de mise à jour de chaque donnée,
le deuxième critère sémantique étant un critère de cohérence pour au moins une donnée prédéfinie, et
le troisième critère sémantique étant un critère de cohérence entre au moins deux données prédéfinies,
- un module de génération (28) configuré pour générer un signal d'alerte en cas de détection d'un comportement anormal de l'application (14) lors de la mise en oeuvre d'au moins l'une desdites surveillances.

9. Système électronique avionique comprenant :
- une mémoire (12) apte à stocker au moins une application logicielle avionique (14) ;
- une plateforme (16) apte à exécuter chaque application logicielle avionique (14), la plateforme (16) comportant des ressources (18) et hébergeant un système d'exploitation (20) ; et
- un dispositif électronique (24) de surveillance de chaque application logicielle avionique (14), le dispositif électronique de surveillance (24) étant selon la revendication 8.

## Patentansprüche

1. Verfahren zur Überwachung einer avionischen Softwareanwendung (14), die geeignet ist, auf einer Plattform (16) ausgeführt zu werden, die Ressourcen (18) aufweist und ein Betriebssystem (20) hostet, wobei die Plattform (16) dazu bestimmt ist, an Bord eines Luftfahrzeugs eingebaut zu werden, wobei das Verfahren durch eine elektronische Überwachungsvorrichtung (24) implementiert wird und die Schritte umfasst, die darin bestehen:
- die Implementierung (100) mindestens einer Überwachung der Anwendung (14) unter den vier folgenden Überwachungen:
+ eine syntaktische Überwachung jedes Aufrufs, ausgesendet von der Anwendung (14) an das Betriebssystem (20),
+ eine semantische Überwachung jedes Aufrufs, ausgesendet von der Anwendung (14) an das Betriebssystem (20),
+ eine Überwachung einer Dynamik der Aufrufe, ausgesendet von der Anwendung (14) an das Betriebssystem (20), und
+ eine Überwachung der Verwendung der Ressourcen (18) der Plattform (16) durch die Anwendung (14);
wobei der genannte Schritt der Implementierung die Implementierung der semantischen Überwachung jedes Aufrufs, ausgesendet von der Anwendung (14) an das Betriebssystem (20), umfasst;
wobei die semantische Überwachung die Überprüfung umfasst, dass mindestens eines von erstem, zweitem und drittem semantischen Kriterium durch ein oder mehrere Daten erfüllt ist, die in jedem Aufruf der Anwendung (14) an das Betriebssystem (20) enthalten sind, wobei das oder die Daten, die in jedem Aufruf der Anwendung (14) enthalten sind, ausgewählt sind aus der Gruppe bestehend aus: Daten, die von Sensoren des Luftfahrzeugs stammen, Daten, die von Verarbeitung(en) anderer Anwendungen stammen, Daten, die im Anschluss an eine Aktion eines Piloten des Luftfahrzeugs erzeugt werden,
wobei das erste semantische Kriterium die Zugehörigkeit zu einem vordefinierten Intervall von Werten der Aktualisierungsverzögerung jedes Datums ist,
wobei das zweite semantische Kriterium ein Kriterium für Kohärenz für mindestens ein vordefiniertes Datum ist, und
wobei das dritte semantische Kriterium ein Kriterium für Kohärenz zwischen mindestens zwei vordefinierten Daten ist,
- die Erzeugung (110) eines Warnsignals im Falle der Erkennung eines anormalen Verhaltens der Anwendung (14) bei der Implementierung (100) mindestens einer der genannten Überwachungen.

2. Verfahren nach Anspruch 1, wobei der Schritt der Implementierung die Implementierung von mindestens zwei, vorzugsweise von mindestens drei, ferner vorzugsweise von jeder, der Überwachungen unter der syntaktischen Überwachung, der semantischen Überwachung, der Überwachung der Dynamik und der Überwachung der Verwendung umfasst.

3. Verfahren nach einem der vorhergehenden Ansprüche, wobei die syntaktische Überwachung die Überprüfung mindestens eines von erstem, zweitem und drittem syntaktischen Kriterium umfasst,
wobei das erste syntaktische Kriterium die Zugehörigkeit jedes ausgesendeten Aufrufs zu einer Liste von zulässigen Aufrufen an das Betriebssystem (20) ist,
wobei das zweite syntaktische Kriterium die Konformität der Abfolge der Aufrufe mit zulässigen Aufrufsequenzen ist,
wobei das dritte syntaktische Kriterium die Konformität jedes Datums in Bezug auf ein entsprechendes vordefiniertes Format ist.

4. Verfahren nach einem der vorhergehenden Ansprüche, wobei das Betriebssystem (20) geeignet ist, der Anwendung (14) mehrere Dienste unterschiedlicher Typen anzubieten, und
wobei die Überwachung der Dynamik die Überprüfung umfasst, dass mindestens eines von erstem, zweitem, drittem, viertem und fünftem Kriterium für Dynamik durch die Anwendung (14) erfüllt ist,
wobei das erste Kriterium für Dynamik ist, dass die Anzahl der Dienste, die durch die Anwendung (14) erforderlich sind, im Laufe eines Zeitraums vordefinierter Dauer kleiner als eine vordefinierte maximale Anzahl von Diensten pro Zeiteinheit ist,
wobei das zweite Kriterium für Dynamik ist, dass eine Anzahl von Fehlern bei den Diensten im Laufe eines Zeitraums vordefinierter Dauer kleiner als eine vordefinierte maximale Anzahl von Fehlern ist,
wobei das dritte Kriterium für Dynamik ist, dass die Anzahl unterschiedlicher Typen von Diensten, die durch die Anwendung (14) erforderlich sind, im Laufe eines Zeitraums vordefinierter Dauer kleiner als eine vordefinierte maximale Anzahl von Typen ist,
wobei das vierte Kriterium für Dynamik ist, dass eine Variation der Anzahl von Aufrufen von Diensten nach Typen und im Laufe der verschiedenen vordefinierten Zeiträume kleiner als ein Schwellenwert ist, und
wobei das fünfte Kriterium für Dynamik ist, dass eine Anzahl von Sequenzen von Aufrufen der Dienste im Laufe eines Zeitraums vordefinierter Dauer kleiner als eine vordefinierte maximale Anzahl von Sequenzen ist.

5. Verfahren nach einem der vorhergehenden Ansprüche, wobei die Überwachung der Verwendung die Überprüfung umfasst, dass mindestens ein Ressourcenparameter zu einem jeweiligen vordefinierten Intervall von Werten gehört, wobei jeder Parameter ausgewählt ist aus der Gruppe bestehend aus: einer Anzahl von Speicherzugriffen, einer Menge verwendeten Speichers, einer Streuung der Speicherzugriffe, einer CPU-Ausführungszeit, einer GPU-Ausführungszeit, einer Anzahl verwendeter Eingänge der Plattform (16) und einer Anzahl verwendeter Ausgänge der Plattform (16).

6. Verfahren nach einem der vorhergehenden Ansprüche, wobei der Schritt der Implementierung regelmäßig durchgeführt wird, während im Wesentlichen der gesamten Ausführungsdauer der avionischen Softwareanwendung (14) durch die Plattform (16).

7. Computerprogramm, das Softwareanweisungen umfasst, die, wenn sie durch einen Computer ausgeführt werden, ein Verfahren nach einem der vorhergehenden Ansprüche implementieren.

8. Elektronische Vorrichtung (24) zur Überwachung einer avionischen Softwareanwendung (14), die geeignet ist, auf einer Plattform (16) ausgeführt zu werden, die Ressourcen (18) aufweist und ein Betriebssystem (20) hostet, wobei die Plattform (16) dazu bestimmt ist, an Bord eines Luftfahrzeugs eingebaut zu werden,
wobei die elektronische Überwachungsvorrichtung (24) umfasst:
- ein Überwachungsmodul (26), das konfiguriert ist, mindestens eine Überwachung der Anwendung (14) unter den vier folgenden Überwachungen zu implementieren:
+ eine syntaktische Überwachung jedes Aufrufs, ausgesendet von der Anwendung (14) an das Betriebssystem (20),
+ eine semantische Überwachung jedes von der Anwendung (14) an das Betriebssystem (20) ausgesendeten Aufrufs,
+ eine Überwachung einer Dynamik der von der Anwendung (14) an das Betriebssystem (20) ausgesendeten Aufrufe, und
+ eine Überwachung der Nutzung der Ressourcen (18) der Plattform (16) durch die Anwendung (14);
wobei das genannte Überwachungsmodul (26) dazu konfiguriert ist, die semantische Überwachung jedes von der Anwendung (14) an das Betriebssystem (20) ausgesendeten Aufrufs zu implementieren;
wobei die semantische Überwachung die Überprüfung umfasst, dass mindestens eines von erstem, zweitem und drittem semantischem Kriterium durch eine oder mehrere Datenangaben erfüllt ist, die in jedem Aufruf der Anwendung (14) an das Betriebssystem (20) enthalten sind, wobei die in jedem Aufruf der Anwendung (14) enthaltene Datenangabe oder die darin enthaltenen Datenangaben aus der Gruppe ausgewählt sind, bestehend aus: Daten, die aus Sensoren des Luftfahrzeugs stammen, Daten, die aus Verarbeitung(en) anderer Anwendungen stammen, Daten, die infolge einer Handlung eines Piloten des Luftfahrzeugs erzeugt werden,
wobei das erste semantische Kriterium die Zugehörigkeit zu einem vordefinierten Intervall von Werten der Aktualisierungsverzögerung jeder Datenangabe ist,
wobei das zweite semantische Kriterium ein Kriterium für Kohärenz für mindestens eine vordefinierte Datenangabe ist, und
wobei das dritte semantische Kriterium ein Kriterium für Kohärenz zwischen mindestens zwei vordefinierten Datenangaben ist,
- ein Erzeugungsmodul (28), das dazu konfiguriert ist, ein Warnsignal im Falle einer Detektion eines anomalen Verhaltens der Anwendung (14) bei der Implementierung mindestens einer der genannten Überwachungen zu erzeugen.

9. Avionisches elektronisches System, umfassend:
- einen Speicher (12), der dazu geeignet ist, mindestens eine avionische Softwareanwendung (14) zu speichern;
- eine Plattform (16), die dazu geeignet ist, jede avionische Softwareanwendung (14) auszuführen, wobei die Plattform (16) Ressourcen (18) umfasst und ein Betriebssystem (20) beherbergt; und
- eine elektronische Vorrichtung (24) zur Überwachung jeder avionischen Softwareanwendung (14), wobei die elektronische Überwachungsvorrichtung (24) der Vorrichtung nach Anspruch 8 entspricht.

## Claims

1. A method for monitoring an avionics software application (14), able to be executed on a platform (16) including resources (18) and hosting an operating system (20), the platform (16) being intended to be on board an aircraft, the method being implemented by an electronic monitoring device (24) and comprising the steps consisting in:
- implementing (100) at least one monitoring operation of the application (14) from among the following four monitoring operations:
+ syntactic monitoring of each call emitted by the application (14) to the operating system (20),
+ semantic monitoring of each call emitted by the application (14) to the operating system (20),
+ monitoring of a dynamic of the calls emitted by the application (14) to the operating system (20), and
+ monitoring of the use of platform (16) resources (18) by the application (14);
the implementation step including the semantic monitoring of each call emitted by the application (14) to the operating system (20),
the semantic monitoring including verifying that at least one of first, second and third semantic criteria is met by one or more data contained in each call from the application (14) to the operating system (20), the or each data contained in each call from the application (14) being chosen from among the group consisting of: data coming from sensors of the aircraft, data from processing of other applications, data generated after an action by a pilot of the aircraft,
the first semantic criterion being the belonging to a predefined interval of values of the update time frame for each datum,
the second semantic criterion being a coherence criterion for at least one predefined datum, and
the third semantic criterion being a coherence criterion between at least two predefined data,
- generating (110) an alarm signal if an abnormal behavior of the application (14) is detected during the implementation (100) of at least one of said monitoring operations.

2. The method according to claim 1, wherein the implementation step includes implementing at least two, preferably at least three, still more preferably each, of the monitoring operations from among the syntactic monitoring, semantic monitoring, monitoring of the dynamics and monitoring of the use.

3. The method according to any one of the preceding claims, wherein the syntactic monitoring includes verifying at least one of first, second and third syntactic criteria,
the first syntactic criterion being the belonging of each emitted call to a list of authorized calls to the operating system (20),
the second syntactic criterion being the compliance of the series of calls with authorized call sequences,
the third syntactic criterion being the compliance of each datum relative to a predefined corresponding format.

4. The method according to any one of the preceding claims, wherein the operating system (20) is able to offer several services, of different types, to the application (14), and
wherein the monitoring of the dynamics includes verifying that at least one of first, second, third, fourth and fifth dynamics criteria is met by the application (14),
the first dynamics criterion being that the number of services required by the application (14) is, during a period of time with a predefined duration, below a predefined maximum number of services per unit of time,
the second dynamics criterion being that a number of errors on the services is, during a period of time with a predefined duration, below a predefined maximum number of errors,
the third dynamics criterion being that the number of different types of services required by the application (14) is, during a period of time with a predefined duration, below a predefined maximum number of types,
the fourth dynamics criterion being that a variation in the number of calls for services by type and during different predefined time periods is below a threshold, and
the fifth dynamics criterion being that a number of call sequences for services is, during a period of time with a predefined duration, below a predefined maximum number of sequences.

5. The method according to any one of the preceding claims, wherein the monitoring of the use includes verifying that at least one resource parameter belongs to a respective predefined value interval, each parameter being chosen from among the group consisting of: a memory access number, a quantity of memory used, a dispersion of memory accesses, a CPU execution time, a GPU execution time, a number of inputs used of the platform (16) and a number of outputs used of the platform (16).

6. The method according to any one of the preceding claims, wherein the implementation step is carried out regularly, during substantially the entire execution duration of the avionics software application (14) by the platform (16).

7. A computer program comprising software instructions which, when executed by a computer, carry out a method according to any one of the preceding claims.

8. An electronic device (24) for monitoring an avionics software application (14), able to be executed on a platform (16) including resources (18) and hosting an operating system (20), the platform (16) being intended to be on board an aircraft,
the electronic monitoring device (24) comprising:
- a monitoring module (26) configured to implement at least one monitoring operation of the application (14) from among the following four monitoring operations:
+ syntactic monitoring of each call emitted by the application (14) to the operating system (20),
+ semantic monitoring of each call emitted by the application (14) to the operating system (20),
+ monitoring of a dynamic of the calls emitted by the application (14) to the operating system (20), and
+ monitoring of the use of platform (16) resources (18) by the application (14);
the monitoring module (26) being configured to implement the semantic monitoring of each call emitted by the application (14) to the operating system (20),
the semantic monitoring including verifying that at least one of first, second and third semantic criteria is met by one or more data contained in each call from the application (14) to the operating system (20), the or each data contained in each call from the application (14) being chosen from among the group consisting of: data coming from sensors of the aircraft, data from processing of other applications, data generated after an action by a pilot of the aircraft,
the first semantic criterion being the belonging to a predefined interval of values of the update time frame for each datum,
the second semantic criterion being a coherence criterion for at least one predefined datum, and
the third semantic criterion being a coherence criterion between at least two predefined data,
- a generating module (28) configured to generate an alarm signal if an abnormal behavior of the application (14) is detected during the implementation of at least one of said monitoring operations.

9. An electronic avionics system, comprising:
- a memory (12) able to store at least one avionics software application (14);
- a platform (16) able to execute each avionics software application (14), the platform (16) including resources (18) and hosting an operating system (20); and
- an electronic monitoring device (24) for each avionics software application (14), the electronic monitoring device (24) being according to claim 8.
